# NEW EUROPEAN PATENT SPECIFICATION

(11) **EP 1 335 139 B2**
(45) Date of publication and mention of the opposition decision: **13.06.2012**
(45) Mention of the grant of the patent: 23.04.2008
(21) Application number: 03075289.3
(22) Date of filing: 30.01.2003
(51) Int. Cl.: F16B 12/32, A47B 13/06

(54) **Substructure for height adjustable table**
Unterkonstruktion für höhenverstellebaren Tisch
Sous-structure pour table réglable en hauteur

(30) Priority: 30.01.2002 DK 200200147
(43) Date of publication of application: 13.08.2003
(73) Proprietor: LINAK A/S, DK-6430 Nordborg (DK)
(72) Inventor: Jorgen, Jens, 6310 Broager (DK); Jacobsen, Nielsen Finn, 6430 Nordborg (DK); Riis, Martin, 6430 Nordborg (DK)
(74) Representative: Pedersen, Soeren Skovgaard

(56) References cited:
- WO-A-01/10269
- DE-A- 2 142 537
- DE-A- 4 315 649
- DE-A- 10 019 292
- FR-A- 2 629 697
- US-A- 4 582 001
- "Antriebe-Führung-Ergonomietechnik", K+B Ergonomietechik, 01.07.2001

## Description

The present invention relates to an underframe for height-adjustable tables and comprising at least a pair of lifting columns having a four-sided or substantially four-sided cross-section and a cross member, said cross member being connected with the lifting columns by a bracket comprising a column bracket secured to the lifting column.

Underframes having a single lifting column at each side, where the columns have a rectangular cross-section, are known, cf. e.g. EP 1 079 511 to Linak, in which a table with lifting columns DESKLINE®DL1 of the make Linak A/S is indicated. The lifting columns typically have a lower stationary member and one or two members telescoping in it. The columns may be adjusted manually, as the weight is typically balanced by gas/torsion springs, or electrically with an electric motor driving a spindle unit WO 01/78556 to Okin, DE 199 20 672 to Baumeister. Also known is a novel construction, where the drive unit comprises an endless chain driven by an electric motor PCT/DK02/00467 (=WO-A-03 003 876) to Linak. The lower end of the lifting columns is secured in an elongated foot, while a tabletop may be mounted on top of the columns. The stationary member of the lifting columns is connected at the top with a cross member, typically a profile of rectangular cross-section. The cross member is secured to a wide side of the column. A narrow plate member having two threaded holes is welded on the wide side, and a similar plate member is welded on the end of the cross member and extends vertically past the cross member. The two flaps, which thereby extend upwards and downwards, respectively, from the cross member, are formed with holes for securing the cross member with machine screws in the threaded holes in the column bracket. The construction has a good stability as far as it goes, but, on the other hand, there is a wish for a greater rigidity of the construction.

Another aspect in this connection is that if the side wall of the column is deformed by a local load because of the narrow bracket on the side wall, this may affect the function of the column, in particular when the wall curves inwards and gets into contact with the internal members.

The object of the invention is to provide a joint of greater rigidity between column and cross member, it being required at the same time that the construction is simple and easy to manufacture. In addition, it is an absolute requirement that columns and cross member may be transported separately. Since height-adjustable tables are now becoming increasingly popular also in dwellings, it is moreover desirable that the joint between column and cross member may be made easy to perform. The sale to private persons typically takes place as do it yourself furniture.

The object is achieved according to the invention by an underframe as defined in claim 1. This provides an extremely rigid joint between the cross member and the columns, as the joint utilizes the corner region rigidity in the columns. The bracket may be secured inwards on the side of the column, and the bracket is then supported by the rigid corner regions, but the rigidity is increased if the attachment is also performed in the corner region. The column bracket may be formed as an integrated part of the cross member, e.g. by construction and bending of flaps thereon, but it is preferred to use a separate and more rigid cross member bracket which is secured to the cross member.

In an embodiment where the lifting column has a rectangular or a substantially rectangular cross-section, the column bracket is secured on a narrow side of the column, which results in a bracket with smaller dimensions compared to securing on the wide side and also gives a greater rigidity.

The shape of the cross member, in cross-section as well as in longitudinal section, may be adapted as desired, of course, as long as its stability is in order. A cross member of four-sided or substantially four-sided cross-section is particularly simple and advantageous for securing. Thus, a cross member bracket which per se is rigid and constructed so as to extend out to or substantially out to two adjacent, horizontal corner edges of the cross member, gives a particularly good stability. When the cross member bracket is secured on the side of the cross member, it may be positioned such that it faces away from the user of the table, which increases the leg-room. In the traditional structures where the cross member is secured between the lifting column sides facing toward each other, it has been necessary to make a curve on the cross member in order to create sufficient leg-room.

The wish for an easy-to-mount joint is met by a wedge bracket, allowing the cross member to be mounted without the use of tools. If locking of the cross member in the mounted state is desired, this may take place with a locking screw, e.g. a pointed screw which is screwed from the cross member into the column. The wedge bracket being attractive in that it is rigid and may be formed with a thickness of only three thicknesses of material, so that it is not very conspicuous in the end product.

The invention will be explained more fully below with reference to the embodiment shown in the accompanying drawing. In the drawing:
Fig. 1 shows an underframe for a height-adjustable table, said underframe being shown without feet,
fig. 2 shows a perspective view of a column bracket, seen inwards toward the column,
fig. 3 shows a perspective view of a cross member bracket, seen inwards toward the cross member,
fig. 4 shows a lifting column in the fully extended position, and
fig. 5 shows an end of the cross member having the cross member bracket mounted thereon.

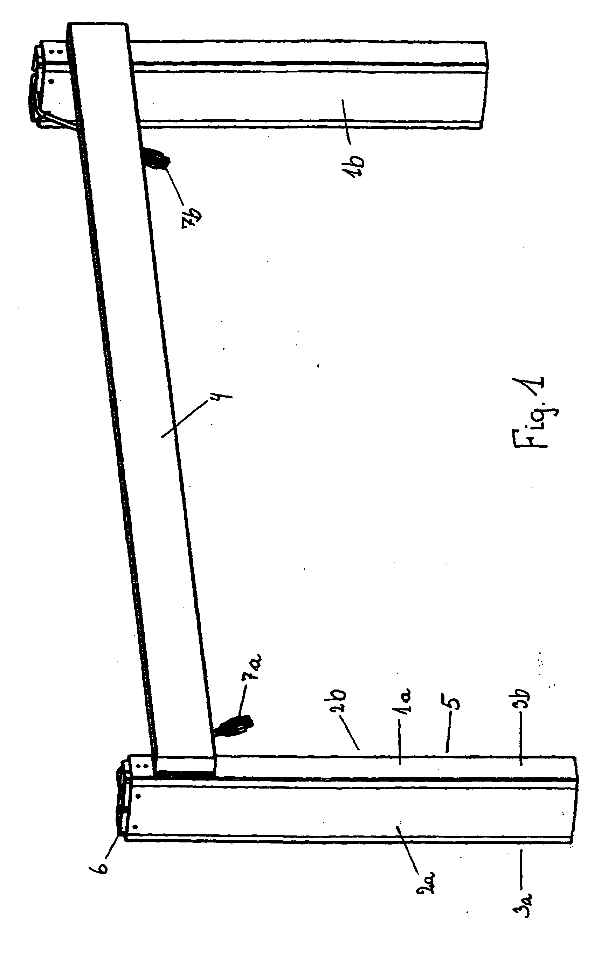

The underframe shown in fig. 1 for a height-adjustable table comprises two electrically driven lifting columns 1a, 1b having an essentially rectangular cross-section with a pair of wide sides 2a, 2b and a pair of narrow sides 3a, 3b. The columns are interconnected by a cross member 4 consisting of a profile having a rectangular cross-section closed at both ends.

The lifting columns 1a, 1b have a stationary member 5 at the bottom and either one or two extensible members 6. The lower end of the stationary member 5 is secured in a foot (not shown). This foot may be elongated and extend out from the narrow sides of the column.

It is noted for the sake of good order that the lifting columns are connected by cables 7a, 7b to a control box with control equipment and a power supply, which may optionally be separate. In addition, a control panel is provided, arranged expediently for the user for moving the table up and down.

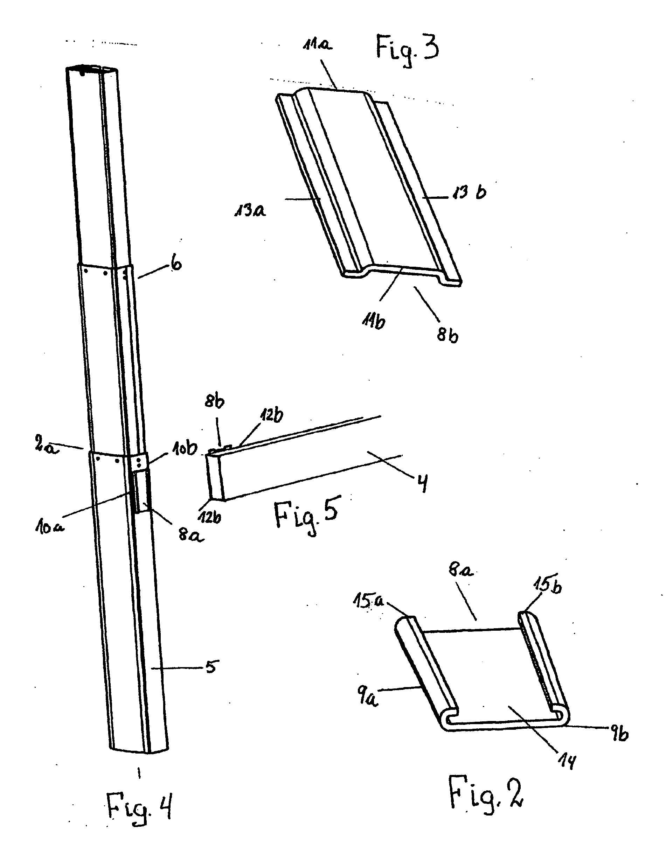

The lifting columns and the cross member are interconnected by a wedge bracket, where the column bracket 8a is shown in fig. 2, while the cross member bracket 8b is shown in fig. 3.

As will appear from fig. 4, the column bracket 8a is welded at its side edges 9a, 9b in two adjacent corner regions 10a, 10b of the outer profile 5 of the column. In fig. 4, the column is shown in its fully extended position.

As will appear from fig. 5, the cross member bracket 8b is welded with its upper and lower edges 11a, 11b to two adjacent longitudinal corner regions 12a, 12b of the cross member 4.

In the mounting, the two side flaps 13a, 13b of the cross member bracket are moved down into the pocket 14 of the column bracket. The pocket is formed by the bent side edges 15a, 15b of the column bracket and receives the side flaps 13a, 13b. The bracket is wedge-shaped downwards, i.e. widest at the top and narrowest at the bottom. Pressure on the cross member causes the cross member bracket to be wedged in the column bracket, thereby securing columns and cross member to each other.

The invention thus provides a rigid joint, as the rigidity at the corner regions is utilized, and at the same time the joint is easy to perform is it may take place without the use of tools.

A beam-shaped cross member is shown here, but it will be appreciated that the cross member may have other shapes, just as it may be provided with cover plates which close the opening between the two lifting columns.

## Claims

1. An underframe for a height-adjustable table comprising at least a pair of lifting columns (1a,1b) having a four-sided or substantially four-sided cross-section and a cross member (4), said cross member (4) being connected with the lifting columns (1a,1b) by a bracket comprising a column bracket (8a) secured to the lifting column, **characterized in that** the bracket is a wedge bracket (8a, 8b) comprising a column bracket (8a) and a cross member bracket (8b) and that the column bracket per se is rigid and constructed so as to extend out to two adjacent corner edges (10a, 10b) of the lifting column so that the column bracket (8a) is supported by the rigid corner regions of the lifting column, and that the column bracket (8a) is formed by a plate member whose side regions are bent so that edges (15a,15b) face toward each other, that the cross member bracket (8b) is formed by a plate member whose side regions (13a, 13b) are offset relative to a central portion so that the cross member bracket (8b) with the offset side regions (13a, 13b) may be introduced below the bent side regions of the column bracket, while the central portion of the cross member bracket may be received between the edges (15a, 15b) thereof.

2. An underframe according to claim 1, **characterized in that** the column bracket (8a) is secured to or at the two adjacent corner edges (10a, 10b) of the column.

3. An underframe according to claim 1 or 2, **characterized in that** the column bracket (8a) is an integrated part of the cross member (4).

4. An underframe according to claim 1, 2 or 3, **characterized in that** the columns have a rectangular cross-section, and that the column bracket (8a) is secured to a narrow side (3b) of the column.

5. An underframe according to claim 1, **characterized in that** the cross member bracket (8b) is secured to the cross member (4).

6. An underframe according to claim 1, **characterized in that** the cross member (4) has a four-sided or substantially four-sided cross-section.

7. An underframe according to claim 5, **characterized in that** the cross member bracket (8b) per se is rigid and constructed so as to extend out to or substantially out to two adjacent, horizontal corner edges (12a, 12b) of the cross member (4).

8. An underframe according to claim 7, **characterized in that** the cross member bracket (8b) is secured to the side of the cross member (4).

## Patentansprüche

1. Grundrahmen für einen höhenverstellbaren Tisch, umfassend wenigstens ein paar Hubsäulen (1a, 1b) mit einem vierseitigen oder im Wesentlichen vierseitigen Querschnitt und einem Querelement (4), wobei das Querelement (4) mit den Hubsäulen (1a, 1b) über einen Halter befestigt ist, der einen Säulenhalter (8a) umfasst, der (seinerseits) an der Hubsäule befestigt ist, **dadurch gekennzeichnet, dass** der Halter ein Keilhalter (8a, 8b) ist umfassend einen Säulenhalter (8a) und einen Querelementhalter (8b), und dass der Säulenhalter (8a) für sich starr und so aufgebaut ist, dass er sich zu zwei benachbarten Eckrändern (10a, 10b) der Hubsäule hin derart nach außen erstreckt, dass der Säulenhalter (8a) von den starren Eckbereichen der Hubsäule getragen ist, und dass der Säulenhalter (8a) von einem Plattenelement gebildet ist, dessen Seitenbereiche so gekrümmt sind, dass Ränder (15a, 15b) einander zugewandt sind, dass der Querelementhalter (8b) durch ein Plattenteil gebildet ist, dessen Seitenbereiche (13a, 13b) relativ zu einem zentralen Abschnitt derart versetzt sind, dass der Querelementhalter (8b) mit den versetzten Seitenbereichen (13a, 13b) unterhalb der gekrümmten Seitenbereiche des Säulenhalters eingeführt werden kann, während der zentrale Abschnitt des Querelementhalters zwischen den Rändern (15a, 15b) davon aufgenommen werden kann.

2. Grundrahmen nach Anspruch 1, **dadurch gekennzeichnet, dass** der Säulenhalter (8a) mit oder an den zwei benachbarten Eckrändern (10a, 10b) der Säule befestigt ist.

3. Grundrahmen nach Anspruch 1 oder 2, **dadurch gekennzeichnet, dass** der Säulenhalter (8a) ein integrales Teil des Querelements (4) ist.

4. Grundrahmen nach Anspruch 1, 2 oder 3, **dadurch gekennzeichnet, dass** die Säulen rechteckigen Querschnitt aufweisen und dass der Säulenhalter (8a) mit einer Schmalseite (3b) der Säule verbunden ist.

5. Grundrahmen nach Anspruch 1, **dadurch gekennzeichnet, dass** der Querelementhalter (8b) an dem Querelement (4) befestigt ist.

6. Grundrahmen nach Anspruch 1, **dadurch gekennzeichnet, dass** das Querelement (4) einen vierseitigen oder im Wesentlichen vierseitigen Querschnitt aufweist.

7. Grundrahmen nach Anspruch 5, **dadurch gekennzeichnet, dass** der Querelementhalter (8b) für sich starr und so aufgebaut ist, dass er sich nach außen oder im Wesentlichen nach außen zu zwei benachbarten, horizontalen Eckrändern (12a, 12b) des Querelements (4) erstreckt.

8. Grundrahmen nach Anspruch 7, **dadurch gekennzeichnet, dass** der Querelementhalter (8b) an der Seite des Querelements (4) befestigt ist.

## Revendications

1. Sous-structure pour table réglable en hauteur, comprenant au moins une paire de colonnes de levage (1a, 1b) ayant une coupe transversale à quatre côtés ou sensiblement à quatre côtés et une traverse (4), ladite traverse (4) étant reliée aux colonnes de levage (1a, 1b) par un support comprenant un support de colonne (8a) fixé à la colonne de levage, **caractérisée en ce que** le support est un support à coin (8a, 8b) comprenant un support de colonne (8a) et un support de traverse (8b) et **en ce que** le support de colonne en soi est rigide et construit de façon à s'étendre jusqu'à deux bords d'angle adjacents (10a, 10b) de la colonne de levage, de sorte que le support de levage (8a) soit supporté par les régions d'angle rigides de la colonne de levage et **en ce que** le support de colonne (8a) est formé d'un élément de plaque dont les régions latérales sont repliées pour que les bords (15a, 15b) soient tournés l'un vers l'autre, tandis que le support de traverse (8b) est formé d'un élément de plaque dont les régions latérales (13a, 13b) sont décalées par rapport à une portion centrale de sorte que le support de traverse (8b) avec les régions latérales décalées (13a, 13b) puisse être introduit en dessous des régions latérales repliées du support de colonne, tandis que la portion centrale du support de traverse peut être reçue entre les bords (15a, 15b) de celui-ci.

2. Sous-structure selon la revendication 1, **caractérisée en ce que** le support de colonne (8a) est fixé aux deux bords d'angle adjacents (10a, 10b) de la colonne.

3. Sous-structure selon la revendication 1 ou 2, **caractérisée en ce que** le support de colonne (8a) est une partie intégrée de la traverse (4).

4. Sous-structure selon la revendication 1, 2 ou 3, **caractérisée en ce que** les colonnes ont une coupe transversale rectangulaire et **en ce que** le support de colonne (8a) est fixé à un petit côté (3b) de la colonne.

5. Sous-structure selon la revendication 1, **caractérisée en ce que** le support de traverse (8b) est fixé à la traverse (4).

6. Sous-structure selon la revendication 1, **caractérisée en ce que** la traverse (4) présente une coupe transversale à quatre côtés ou sensiblement à quatre côtés.

7. Sous-structure selon la revendication 5, **caractérisée en ce que** le support de traverse (8b) est en soi rigide et construit de façon à s'étendre jusqu'à ou sensiblement jusqu'à deux bords d'angle horizontaux adjacents (12a, 12b) de la traverse (4).

8. Sous-structure selon la revendication 7, **caractérisée en ce que** le support de traverse (8b) est fixé au côté de la traverse (4).
